(19) Europäisches Patentamt
European Patent Office
Office européen des brevets

(11) **EP 3 233 577 B1**

(12) **EUROPÄISCHE PATENTSCHRIFT**

(45) Veröffentlichungstag und Bekanntmachung des Hinweises auf die Patenterteilung:
**13.06.2018 Patentblatt 2018/24**

(21) Anmeldenummer: **15834666.8**

(22) Anmeldetag: **18.12.2015**

(51) Int Cl.:
***B60R 21/00*** *(2006.01)*

(86) Internationale Anmeldenummer:
**PCT/DE2015/100542**

(87) Internationale Veröffentlichungsnummer:
**WO 2016/095909 (23.06.2016 Gazette 2016/25)**

(54) **GASDRUCKBEHÄLTER UND ROHRELEMENT FÜR EIN AIRBAGSYSTEM SOWIE VERFAHREN ZU DESSEN HERSTELLUNG**

GAS PRESSURE CONTAINER AND TUBE ELEMENT FOR AN AIRBAG SYSTEM, AND METHOD FOR PRODUCING SAME

RÉCIPIENT DE GAZ COMPRIMÉ ET ÉLÉMENT TUBULAIRE POUR SYSTÈME D'AIRBAG, AINSI QUE PROCÉDÉ POUR LE FABRIQUER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2014 DE 102014018816**

(43) Veröffentlichungstag der Anmeldung:
**25.10.2017 Patentblatt 2017/43**

(73) Patentinhaber: **Benteler Steel/Tube GmbH**
**33104 Paderborn (DE)**

(72) Erfinder:
• **TEGETHOFF, Dirk**
**33154 Salzkotten (DE)**
• **ROSE, Leonhard**
**33178 Borchen (DE)**
• **WROBEL, Darius**
**33106 Paderborn (DE)**

(74) Vertreter: **Osterhoff, Utz**
**Bockermann Ksoll**
**Griepenstroh Osterhoff**
**Patentanwälte**
**Bergstraße 159**
**44791 Bochum (DE)**

(56) Entgegenhaltungen:
**EP-A1- 1 816 227     EP-A1- 1 983 065**
**US-B1- 8 196 956**

**Beschreibung**

Die Erfindung betrifft einen Gasdruckbehälter insbesondere für ein Airbagsystem eines Kraftfahrzeugs sowie ein Rohrelement für einen Gasdruckbehälter und ein Verfahren zu dessen Herstellung.

Ein gattungsgemäßer Gasdruckbehälter wird in der EP 1 983 065 A1 beschreiben und bildet den Oberbegriff des Patentanspruchs 1. Der Gasdruckbehälter für ein Airbagsystem umfasst ein Rohrelement mit hoher Berstfestigkeit bei Innendruckbeaufschlagung, wobei das Rohrelement aus einer Stahllegierung besteht und in einem ersten Längenabschnitt eine Übergangstemperatur von mindestens Minus (-) 40 Grad Celsius (°C) aufweisen soll, und das Rohrelement einen zweiten Längenabschnitt und einen dritten Längenabschnitt umfasst, welche sich axial vom ersten Längenabschnitt in Richtung zweier gegenüberliegender Enden des Rohrelements erstrecken. Die Längenabschnitte sind einstückig und stoffeinheitlich aus einem nahtlosen oder geschweißten warmgewalzten und/oder kaltgezogenen Rohr ausgebildet, wobei der zweite Längenabschnitt und der dritte Längenabschnitt einen Außenumfang aufweist, der gegenüber dem Außenumfang des ersten Längenabschnitts verringert ist. Um die hohe Berstfestigkeit auch bei niedrigen Temperaturen zu gewährleisten, schlägt die Druckschrift vor, das fertig geformte Rohrelement, das heißt nach einem Reduzieren des Außenumfangs im zweiten und dritten Längenabschnitt, vollständig zu Härten und Anzulassen, so dass sich ein einheitliches metallisches Gefüge mit überwiegend angelassenem Martensit im gesamten Rohrelement des Gasdruckbehälters und eine Zugfestigkeit größer als 700 Megapascal (MPa) im nicht reduzierten mittleren Längenabschnitt einstellt.

Nachteilig ist jedoch, dass durch die Vergütung des an den Enden verjüngten Rohrelements die Geometriegenauigkeit sowie die Oberflächenqualität reduziert sind. Zudem werden durch die Verringerung des Außenumfangs der zweiten und dritten Längenabschnitte im kaltgezogenen Zustand die Kaltumformbarkeit und die Berstfestigkeit im Vergleich zum nicht reduzierten ersten Längenabschnitt negativ beeinflusst.

Des Weiterem beschreibt die US 2002 040 907 A1 einen Gasdruckbehälter mit einem Rohrelement aus Stahl, wobei das Rohrelement mehrstufig aus einem Blech tiefgezogen und dabei ein letzter Längenabschnitt nur einstufig gezogen und danach ein Längenabschnitt, insbesondere ein Übergangsbereich zwischen unterschiedlich oft gezogenen Längenabschnitten, einer Wärmebehandlung unterzogen wird. Durch die Wärmebehandlung soll eine gezielte Energieaufnahme einhergehend mit der Beendigung eines beginnenden axialen Risses beim Test bewirkt werden. Tiefgezogene Rohrelemente jedoch sind in ihrer Berstfestigkeit trotz mehrfacher Wärmebehandlungen nicht ausreichend für heutige Anforderungen, die durch Leichtbauforderungen und einhergehenden dünneren Wanddicken höherfester Stähle geprägt sind. Ein ähnliches Verfahren zur Herstellung eines Gasdruckbehälters ist aus der US 8,196,956 B1 bekannt.

Die Aufgabe der Erfindung besteht daher darin, einen verbesserten Gasdruckbehälter mit einem Rohrelement aufzuzeigen, der höhere Anforderungen an die Berstfestigkeit und das Berstverhalten bei Innendruckbeaufschlagung erfüllt.

Weiterhin ist Aufgabe, ein entsprechendes Rohrelement vorzuschlagen, was im Hinblick auf eine mechanische Bearbeitbarkeit zur Verwendung in einem Gasdruckbehälter verbessert ist.

Weiterhin besteht die Aufgabe darin, ein Herstellverfahren aufzuzeigen, mit welchem ein Gasdruckbehälter besonders wirtschaftlich und in höchster Qualität erzeugt werden kann.

Der gegenständliche Teil der Aufgabe wird durch die Merkmale des Patentanspruchs 1 gelöst. Die Unteransprüche 2 bis 13 bilden vorteilhafte Weiterbildungen der Erfindung.

Der verfahrensmäßige Teil der Aufgabe wird durch die Merkmale des Patentanspruchs 14 gelöst, wobei der nachfolgende Unteranspruch 15 wiederum vorteilhafte Ausführungsformen bildet.

Es wird ein Gasdruckbehälter vorgeschlagen, insbesondere für ein Airbagsystem eines Kraftfahrzeugs, umfassend ein Rohrelement mit hoher Berstfestigkeit bei Innendruckbeaufschlagung, wobei das Rohrelement aus einer Stahllegierung besteht und in einem ersten Längenabschnitt eine Zugfestigkeit größer 800 Megapascal, eine Übergangstemperatur von mindestens bzw. kleiner (minus) -40°C und einen Außenumfang aufweist, wobei das Rohrelement wenigstens einen zweiten Längenabschnitt sowie optional weitere Längenabschnitte umfasst, die sich axial vom ersten Längenabschnitt erstrecken, wobei der zweite Längenabschnitt sowie optional weitere Längenabschnitte sowie der erste Längenabschnitt einstückig und stoffeinheitlich aus einem nahtlosen oder geschweißten, insbesondere warmgewalzten oder kaltgezogenen Rohr ausgebildet sind, wobei der zweite Längenabschnitt sowie optional weitere Längenabschnitte einen Außenumfang aufweist/aufweisen, der gegenüber dem Außenumfang des ersten Längenabschnitts verringert ist. Kennzeichnend dabei ist, dass das Rohrelement im zweiten Längenabschnitt und optional im weiteren Längenabschnitt eine Übergangstemperatur kleiner (minus) -50°C sowie kleiner als die Übergangstemperatur des ersten Längenabschnitts aufweist.

Dabei wird die Übergangstemperatur ermittelt durch eine Probennahme im jeweiligen Längenabschnitt als ringförmige Kerbschlagprobe, das heißt, als schmaler Rohrabschnitt mit einer zu Testzwecken eingebrachten Sollkerbe. Nach Abkühlung auf Tieftemperaturbedingung des Tests erfolgt ein axialer Schlag auf die Probe. Bei derjenigen Tieftemperatur, bei der von einem plastischen auf ein sprödes Bruchverhalten der Proben übergegangen wird, spricht man von der Übergangstemperatur. Es versteht sich, dass zu deren Ermittlung mehrere Proben für die Charakterisierung eines Längenabschnitts getestet werden müssen. Eine Übergangstemperatur kleiner minus 40°C bedeutet im Sinne der Erfindung eine Übergangstemperatur in Richtung von minus 50° C, minus 60° C, minus 70° C, minus 80° C, minus 90° C oder noch kleiner, sowie beliebige Werte zwischen den oben genannten Werten.

Aufgrund der überlegenen Übergangstemperatur des zweiten und optional weiteren Längenabschnitts mit reduziertem Außenumfang ergeben sich eine Vielzahl Vorteile. Zum einen wird zuverlässig verhindert, dass Risse im Test oder in der Praxisanwendung des Airbagsystems auftreten an Stellen, an welchen dies katastrophale Folgen hätte, beispielsweise da, wo eine Anbindung an weitere Bauteile oder Anbauteile vorgesehen ist, so dass die beim Reißen entstehenden Kräfte diese Teile durch den Innenraum schießen könnten. Zum anderen wird auch verhindert, dass durch Sprödbruch der Gasdruckbehälter gar selbst beziehungsweise abgetrennte Teile dessen zum Geschoss werden könnten. Die sonst üblichen, durch die Umfangreduktion eingebrachten Spannungen im zweiten Längenabschnitt und optional in weiteren Längenabschnitten, werden erfindungsgemäß vermieden.

Im Rahmen der Erfindung ist der Außenumfang definiert entweder bei Rundrohren für das Rohrelement als Außendurchmesser, bei mehreckigen Rohren, mehreckigen verjüngten Längenabschnitten oder unsymmetrischer Rohrquerschnitt durch deren Außenumfanglänge.

Bevorzugt weist der Gasdruckbehälter für die Außenumfänge $U_{11}$ des ersten Längenabschnitts, $U_{12}$ des zweiten Längenabschnitts und $U_{13}$, $U_{16}$ der weiteren Längenabschnitte folgenden Zusammenhang auf:

$$U_{12} = (0{,}6 - 0{,}9) \times U_{11}, \qquad \text{insbesondere } U_{12} = (0{,}7 - 0{,}8) \times U_{11},$$

und/oder

$$U_{13} = (0{,}6 - 0{,}9) \times U_{11}, \qquad \text{insbesondere } U_{13} = (0{,}7 - 0{,}8) \times U_{11},$$

und/oder

$$U_{16} = (0{,}65 - 0{,}95) \times U_{11}, \qquad \text{insbesondere } U_{16} = (0{,}75 - 0{,}85) \times U_{11}.$$

Das bedeutet, dass die Übergangstemperatur von weniger bzw. kleiner als -50 °C auch bei der angegebenen Reduktion der Außenumfänge beziehungsweise Außendurchmesser ausgebildet ist. Tendenziell ist davon auszugehen, dass die Übergangstemperatur mit steigender Umfangreduktion durch eine Kaltverfestigung des betroffenen Längenanschnitts ebenfalls leicht steigt.

Weiterhin bevorzugt weist der Gasdruckbehälter eine Wanddicke im zweiten Längenabschnitt und/oder in weiteren Längenabschnitten auf, die größer als die Wanddicke im ersten Längenabschnitt ist, insbesondere ist die Wanddicke im zweiten Längenabschnitt mindestens 5 % größer. Durch die Aufdickung, die besonders durch ein gleichzeitiges Stauchen und Verjüngen eines Endes des Rohrelements mittels konischer Außenringmatrize hergestellt wird, ergibt sich absolut betrachtet eine größere Festigkeit und Zähigkeit. Außerdem hat die dickere Wand Vorteile beim Anbinden von Anbauteilen oder Einbauteilen wie beispielsweise einer Berstscheibe oder Verschlussplatte.

Es ist aber auch möglich, dass die Wanddicke des zweiten und/oder weiterer Längenabschnitts des Gasdruckbehälters kleiner oder gleich der Wanddicke des ersten Längenabschnitts ist. Dies hat den Vorteil, dass gezielt beim Verringern des Außenumfangs Druckeigenspannungen in das Rohrelement eingebracht werden können, um kritischen tangential wirkenden Zugeigenschaften beim Bersttest oder beim Auslösen des Airbagsystems entgegenzuwirken.

Erfindungsgemäß bevorzugt ist wenigstens der zweite Längenabschnitt an einem stirnseitigen Ende des Rohrelements ausgebildet. Besonders bevorzugt sind ein dritter Längenabschnitt am anderen Ende des Rohrelementes und der erste Längenabschnitt als Mittelabschnitt zwischen beiden Enden ausgebildet. Das Rohrelement kann dann durch Hinzufügen, insbesondere umfangseitiges Verschweißen, von Abdeckplatten an den Enden verschlossen ausgebildet sein.

Es ist auch möglich, dass sich der zweite oder ein weiterer Längenabschnitt mit reduziertem Außenumfang zwischen zwei ersten Längenabschnitten mit größerem Außenumfang des Rohrelements erstreckt. Von der Rohrinnenseite ist es damit möglich, Einbauteile an der Innenwand abzustützen oder zu Fügen um beispielsweise eine räumliche Einteilung in mehrere axiale Kammern des Gasgenerators mit beziehungsweise in einem einzigen Rohrelement auszubilden.

Weiterhin kann vorgesehen werden, dass der Gasdruckbehälter wenigstens im zweiten Längenabschnitt mit verringertem Außenumfang $U_{12}$ des Rohrelementes gegenüber dem ersten Längenabschnitt eine erhöhte plastische Umformbarkeit in Umfangsrichtung aufweist, wobei gilt:

$$\text{Umformbarkeit,}_{12} > 1{,}05 \text{ x Umformbarkeit,}_{11}.$$

Die Umformbarkeit kann dabei als Duktilität oder insbesondere auch als Bruchdehnung charakterisiert und mittels Rohraufweitversuch nach DIN EN 8495-2004 ermittelt werden. Die Umformbarkeit ist dabei das Grundformänderungsvermögen. Dies ist eine Relativangabe, z. B. U0/U1, wobei U1 der Umfang bei Auftreten eines Risses ist und U0 der Ausgangsumfang, jeweils ermittelt im Dornaufweitversuch.

Bevorzugt weist der Gasdruckbehälter im ersten Längenabschnitt des Rohrelements ein metallisches Gefüge mit einem Flächenanteil von mindestens 70 Prozent angelassenem Martensit auf. Insbesondere liegt der angelassene Martensit überwiegend in gestreckter Nadelform vor.

Weiterhin kann vorgesehen werden, dass auch der zweite Längenabschnitt des Rohrelementes ein Gefüge aus überwiegend angelassenem Martensit mit einem Flächenanteil von mindestens 70 Prozent aufweist. Im Unterschied zum ersten Längenabschnitt ist jedoch der angelassene Martensit ohne Streckung der Nadeln ausgebildet, wodurch sich die Längenabschnitte auch am noch nicht verjüngten Rohrelement einfach unterscheiden lassen.

Es ist erfindungsgemäß möglich, das der Gasdruckbehälter im zweiten Längenabschnitt gegenüber der Zugfestigkeit $Rm,_{11}$ des ersten Längenabschnitts eine reduzierte Zugfestigkeit $Rm,_{12}$ aufweist, wobei gilt:

$$Rm,_{12} < 0{,}9 \text{ x } Rm,_{11}.$$

Die Zugfestigkeit hat einen positiven Einfluss auf die Berstfestigkeit und ist im verjüngten Längenabschnitt nur unwesentlich niedriger als die Zugfestigkeit im ersten Längenabschnitt. Insbesondere kann die Verringerung der Zugfestigkeit durch ein Anlassen erfolgen. Dies bewirkt eine Entfestigung von wenigstens 10 %, wodurch jedoch gleichzeitig die Kaltzähigkeit gesteigert wird. Dies kann auch für die weiteren Längenabschnitte gelten, wie folgt:

$$Rm,_{13} < 0{,}9 \text{ x } Rm,_{11} \text{ und/oder } Rm,_{16} < 0{,}9 \text{ x } Rm,_{11}.$$

Weiterhin kann vorgesehen werden, dass zwischen dem zweiten Längenabschnitt und dem ersten Längenabschnitt des Rohrelements ein Übergangsbereich angeordnet ist, in welchem die Zugfestigkeit $Rm,_{14}$ kontinuierlich zunimmt, wobei der Übergangsbereich eine Breite aufweist, die zwischen 10 und 100 mm, bevorzugt zwischen 15 und 40 mm beträgt.

Am Gasdruckbehälter kann bevorzugt zwischen dem zweiten Längenabschnitt und/oder zwischen dem dritten Längenabschnitt und dem ersten Längenabschnitt ein Übergangsabschnitt angeordnet sein, in welchem der Außenumfang kontinuierlich in Richtung des ersten Längenabschnitts zunimmt, wobei der Übergangsabschnitt eine Breite aufweist, die größer ist als die Breite des Übergangsbereichs. Die metallurgischen Eigenschaften werden mithin enger und bevorzugt präziser eingestellt als die geometrischen Eigenschaften. Insbesondere sind geometrische Kerbstellen so vermeidbar und die Breite von undefinierten Gefügezuständen im schwer auslegbaren Übergangsbereich vorteilhaft beschränkt.

Der Gasdruckbehälter kann erfindungsgemäß im zweiten Längenabschnitt und optional in weiteren Längenabschnitten des Rohrelementes ein Ferrit-Perlit-Mischgefüge mit einem Flächenanteil von mindestens 70 Prozent aufweisen. Dieses Gefüge entspricht dann im Wesentlichen dem Ausgangsgefüge des Werkstoffs des Stahlrohrs, wobei als Rest jedoch auch Bainit oder Martensit vorhanden sein können. Die Umformbarkeit des Rohrelements in diesem Längenabschnitt ist deutlich verbessert.

Erfindungsgemäß vorteilhaft kann auch vorgesehen werden, dass der zweite Längenabschnitt und/oder der weitere Längenabschnitt als lokale Sollbruchstelle bei Innendruckbeaufschlagung des Gasdruckbehälters ausgebildet ist, bevorzugt ist die Sollbruchstelle in der Mitte des Gasdruckbehälters angeordnet, wodurch ein größtmöglicher Sicherheitsabstand zu den insbesondere mit Abdeckplatten verschweißten Enden gegeben ist. Es ist aber auch möglich, dass die Sollbruchstelle gezielt außermittig ausgebildet wird, insbesondere bei einem ersten Längenabschnitt mit variablem, insbesondere unsymmetrisch radialem Außenumfang oder bei einem unsymmetrisch axial gewölbten Außenumfangverlauf.

Für den Gasdruckbehälter wird ein Rohrelement mit hoher Berstfestigkeit bei Innendruckbeaufschlagung verwendet, wobei das Rohrelement ein nahtloses oder geschweißtes, insbesondere warmgewalztes und kaltgezogenes Stahlrohr konstanten Außenumfanges ist, wobei das Rohrelement einen ersten Längenabschnitt mit einer Zugfestigkeit größer 800 MPa und wenigstens einen zweiten und optional weiteren Längenabschnitt aufweist, und die Längenabschnitte einstückig und stoffeinheitlich ausgebildet sind. Kennzeichen dabei ist, dass der zweite und optional weitere insbesondere durch Kaltumformung zu bearbeitende Längenabschnitt (Indizes 12, 13, 16) des Rohrelementes gegenüber dem ersten Längenabschnitt (Index 11) ein erhöhtes Rohraufweitvermögen,$_{12,13,16}$ nach DIN ISO 8495-2004 auf-

weist, wobei gilt:

$$\text{Rohraufweitvermögen}_{,12} > 1{,}1 * \text{Rohraufweitvermögen}_{,11}$$

und/oder

$$\text{Rohraufweitvermögen}_{,13} > 1{,}1 * \text{Rohraufweitvermögen}_{,11}$$

und/oder

$$\text{Rohraufweitvermögen}_{,16} > 1{,}1 * \text{Rohraufweitvermögen}_{,11}.$$

Das Rohraufweitvermögen wird dabei ermittelt im so genannten Ringaufdornversuch bis zum Bruch nach DIN EN ISO 8495:2004. Auch wenn die Rohraufweitung nicht identisch zum Verhalten bei Rohrverjüngung ist, so ist das Ergebnis des Versuchs doch ein stichhaltiges Maß für die kaltumformtechnische Anwendung bei Rohrelementen für Gasdruckbehälter.

Bevorzugt weist das Rohrelement im zu bearbeitenden zweiten Längenabschnitt eine Härte $HV_{12}$ und/oder in einem weiteren Längenabschnitt eine Härte $HV_{13}$, $HV_{16}$ auf, sowie im ersten Längenabschnitt eine Härte $HV_{11}$. Der zu bearbeitende zweite und/oder weitere Längenabschnitt besitzt gegenüber dem ersten Längenabschnitt eine reduzierte Härte $HV_{12}$ und/oder $HV_{13}$ und/oder $H_{16}$, wobei gilt:

$$HV_{12} / HV_{11} = 0{,}4 \text{ bis } 0{,}99$$

und/oder

$$HV_{13} / HV_{11} = 0{,}4 \text{ bis } 0{,}99$$

und/oder

$$HV_{16} / HV_{11} = 0{,}4 \text{ bis } 0{,}99.$$

Weiterhin bevorzugt besteht das Rohrelement aus einer der nachfolgend benannten drei Zusammensetzungen folgender Legierungselemente in Masseprozent neben Eisen und erschmelzungsbedingten Verunreinigungen:

| | | | |
|---|---|---|---|
| C | zwischen 0,07 und 0,29 | 0,07 bis 0,14 | 0,05 bis 0,2 |
| Si | 0,1 bis 0,55 | 0,1 bis 0,55 | $\leq$ 0,5 |
| Mn | von 0,2 bis 1,6 | von 0,2 bis 1,6 | 0,2 bis 0,6 |
| P | < 0,025 | < 0,025 | < 0,020 |
| s | < 0,02 | < 0,02 | < 0,005 |
| Cr | < 2 | < 1 | 0,6 bis 2 |
| Ti | < 0,03 | < 0,015 | < 0,015 |
| Mo | < 0,6 | < 0,4 | < 0,4 |
| Ni | < 0,6 | < 0,4 | < 0,4 |
| Al | 0,001 bis 0,05 | 0,001 bis 0,05 | 0,001 bis 0,05 |
| V | < 0,2 | < 0,1 | - |
| NB | < 0,05 | < 0,05 | - |

Wichtig ist, dass der Werkstoff gute Vergütungseigenschaften aufweist und eine gute Durchhärtbarkeit, Festigkeit und Schweißbarkeit.

Ein weiterer Aspekt der Erfindung betrifft ein Verfahren zur Herstellung eines Gasdruckbehälters umfassend ein Rohrelement mit hoher Berstfestigkeit bei Innendruckbeaufschlagung, welches ausgehend von einem nahtlosen oder geschweißten Stahlrohr durch folgende Schritte gekennzeichnet ist:

- Härten gefolgt von einem Anlassen des Rohrs, bevorzugt vor einem Kaltziehen,

- Optional Kaltziehen des Rohrs,

- Ablängen zum Rohrelement,

- Partielles Erwärmen des Rohrelements in einem zweiten Längenabschnitt und/oder einem weiteren Längenabschnitt auf Erwärmungstemperatur Tw, für maximal 120s, bevorzugt maximal 30s, wobei ein erster Längenabschnitt dabei nicht erwärmt wird,

- Optionales Halten auf der Temperatur Tw für maximal 120s, bevorzugt für maximal 30s,

- Umformen des zweiten Längenabschnitts und/oder des weiteren Längenabschnitts unter Verringerung seines Außenumfangs $U_{12}$, $U_{13}$, $U_{16}$, bevorzugt sofort nach dem partiellen Erwärmen oder Halten, wobei das Rohrelement einen ersten Längenabschnitt mit Übergangstemperatur $Tu_{,11}$ und einen zweiten Längenabschnitt mit der Übergangstemperatur $Tu_{,12}$ und/oder einen weiteren Längenabschnitt mit $Tu_{,13}$, $Tu_{,16}$ aufweist, wobei gilt:

  - $Tu_{,12} < Tu_{,11}$ und $Tu_{,12} < -50°C$ und/oder
  - $Tu_{,13} < Tu_{,11}$ und $Tu_{,13} < -50°C$ und/oder
  - $Tu_{,16} < Tu_{,11}$ und $Tu_{,16} < -50°C$,

- Abkühlen des zweiten Längenabschnitts und/oder weiteren Längenabschnittes vor oder nach dem Umformen.

Besonders vorteilhaft wird der zweite Längenabschnitt bzw. weitere Längenabschnitt in einer einzigen Fertigungsstufe erwärmt und halbwarm umgeformt, wobei bevorzugt eine Umformtemperatur von kleiner der Rekristallisationstemperatur der Stahllegierung Ac3, insbesondere kleiner der Ac1-Temperatur eingestellt wird. Das führt vor allem zu Kosten-/Energieverbrauchseinsparungen und stellt sicher, dass das angelassene martensitische Grundgefüge mit überwiegend gestreckter Martensitnadelform im ersten Längenabschnitt nicht negativ beeinflusst wird. Die Wärmeeinwirkung kann im Prozess durch aktive Kühlung des ersten Längenabschnitts und/oder durch besonders schnelle, zielgerichtete Wärmequellen für die lokale Rohrbehandlung realisiert werden.

Dass der erste Längenabschnitt dabei im Sinne der Erfindung nicht erwärmt wird bedeutet, dass er keine signifikante Temperaturänderung erfährt. Eine geringfügige Erwärmung aufgrund von Wärmeleitung innerhalb der Rohrwandung von den erwärmten Längenabschnitten in den nicht erwärmten Längenabschnitten wird dabei auch als nicht erwärmt angesehen. Insbesondere bedeutet dies, dass keine grundlegende Änderung des metallurgischen Gefüges und/oder der mechanischen Eigenschaften in dem ersten Längenabschnitt bewirkt werden.

Weiterhin kann vorgesehen werden, dass während der Abkühlung des zweiten Längenabschnitts von der Erwärmungstemperatur auf unter 150°C vorteilhafte tangentiale Eigenspannungen eingestellt werden. Dabei ist günstig, dass den durch das Umformen des zweiten und/oder weiteren Längenabschnitts eingebrachten tangentialen Eigenspannungen entgegengewirkt wird. Dies lässt sich auch durch die so genannte "Ringzerlegemethode" nach Dr. Rainer Krux: "Herstellung eigenschaftsoptimierter Bauteile mit der Hochdruck-Blechumformung und Analyse der induzierten Eigenspannungen", Hrsg. In 2004 durch "Dortmunder Umformtechnik" zeigen.

Es folgen anhand von Figurenbeschreibungen nähere Erläuterungen zu vorteilhaften Ausführungsformen der Erfindung. Für gleiche oder ähnliche Bauteile oder Bereiche werden soweit sinnvoll einheitliche Bezugszeichen verwendet. Die Figuren sind schematisiert dargestellt und beschränken nicht die Beanspruchung möglicher weiterer Ausführungsformen der Erfindung. Die in den Figuren beschriebenen Merkmale der Ausführungsformen sind miteinander auch kombinierbar.

Es zeigen dabei:

Figur 1a bis c     eine erste Ausführungsform des erfindungsgemäßen Gasdruckbehälters,
Figur 2          eine zweite Ausführungsform des erfindungsgemäßen Gasdruckbehälters,
Figur 3          eine dritte Ausführungsform des erfindungsgemäßen Gasdruckbehälters,
Figur 4          eine vierte Ausführungsform des erfindungsgemäßen Gasdruckbehälters,

Figur 5          Härteverlauf am Rohrelement vor Reduktion des Außenumfangs im zweiten Längenabschnitt,
Figur 6a bis c      die Ausführungsform gemäß Figur 4 in einer Seitenansicht und zwei Schnittansichten,
Figur 7a bis c      eine alternative Ausgestaltungsvariante mit Kerbe in einer Seitenansicht und Schnittansicht und
Figur 8          eine schematische Seitenansicht eines Gasdruckbehälters mit angeschweißten Verschlussplatten.

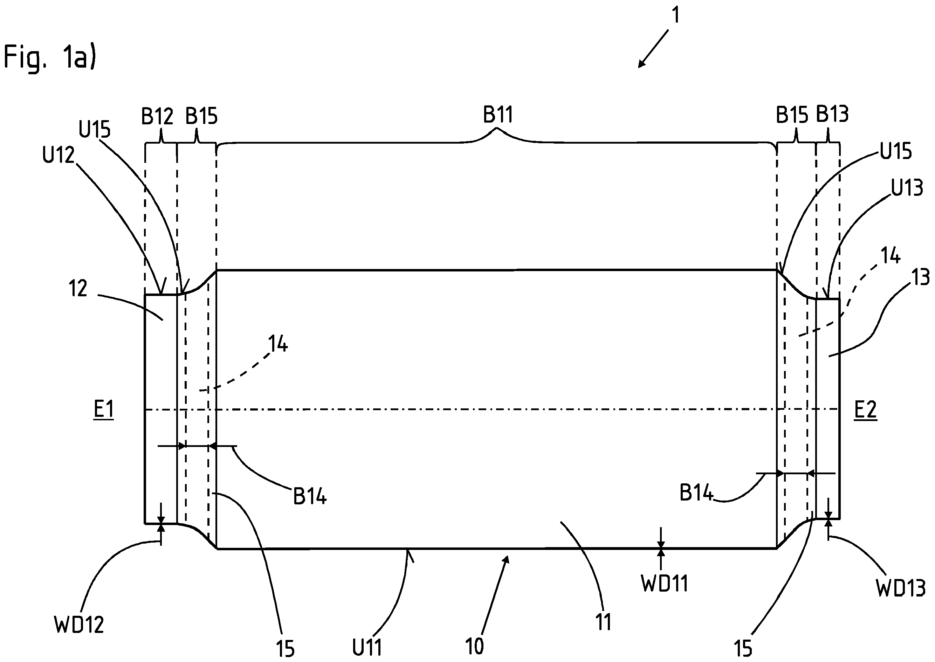

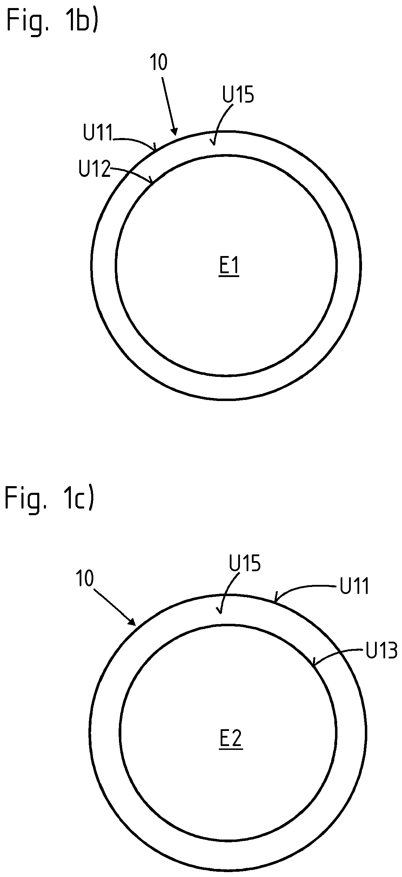

Figur 1a zeigt einen Gasdruckbehälter 1 umfassend ein Rohrelement 10 mit einem zweiten Längenabschnitt 12 mit einer Wanddicke $WD_{12}$ und einem dritten Längenabschnitt 13 und einer Wanddicke $WD_{13}$ an den entsprechenden Enden $E_1$, $E_2$ des Rohrelements 10 und einen zwischen dem zweiten Längenabschnitt 12 und dritten Längenabschnitt 13 angeordneten ersten Längenabschnitt 11. Die zweiten und dritten Längenabschnitte 12, 13 weisen einen geringeren Außenumfang $U_{12}$, $U_{13}$ gegenüber dem Außenumfang $U_{11}$ des ersten Längenabschnitts 11 auf, wie in Figur 1b und 1c ersichtlich, wobei jeweils in einem Übergangsabschnitt 15 der Außenumfang $U_{15}$ kontinuierlich vom ersten Längenabschnitt 11 zu dem zweiten beziehungsweise zu dem dritten Längenabschnitt 12, 13 übergeht. Der erste Längenabschnitt 11 weist einen konstanten Außenumfang $U_{11}$ auf. Der zweite und dritte Längenabschnitt 12, 13 weisen eine Übergangstemperatur $Tu_{,12}$, $Tu_{,13}$ von kleiner als -50°C auf, welche auch kleiner als die Übergangstemperatur $Tu_{,11}$ des ersten Längenabschnitts 11 ist. Der erste Längenabschnitt 11 weist eine Zugfestigkeit von mindestens 800 MPa und ein metallurgisches Gefüge mit einem Flächenanteil von mindestens 70 % angelassenem Martensit auf. Im Übergangsbereich 14 (gestrichelt dargestellt) zwischen erstem Längenabschnitt 11 und zweitem Längenabschnitt 12 beziehungsweise erstem Längenabschnitt 11 und drittem Längenabschnitt 13 liegt ein eher undefiniertes Mischgefüge und/oder undefinierte mechanische Kennwerte vor, weshalb die Breite $B_{14}$ des Übergangsabschnitts 14 geringer ist als die Breite $B_{12}$ des zweiten Längenabschnitts 12 und $B_{13}$ des dritten Längenabschnitts 13. Bevorzugt ist die Breite $B_{14}$ auch kleiner als die Breite $B_{15}$ des Übergangsabschnitts 15. Figur 1b und 1c zeigen jeweils eine Stirnansicht des Rohrelements 10. Gut ersichtlich sind die jeweiligen Außenumfänge $U_{11}$, $U_{12}$ und $U_{11}$, $U_{13}$ sowie der sich jeweils dazwischen erstreckende Umfang $U_{15}$ des Übergangsabschnitts 15. Die Übergangstemperaturen $T_{u,10}$, $T_{u,11}$, $T_{u,11'}$, $Tu_{,12}$ $T_{u,13}$, $T_{u,15}$, $T_{u,16}$ sind in der Beschreibung benannt, jedoch in den Figuren nicht eingezeichnet.

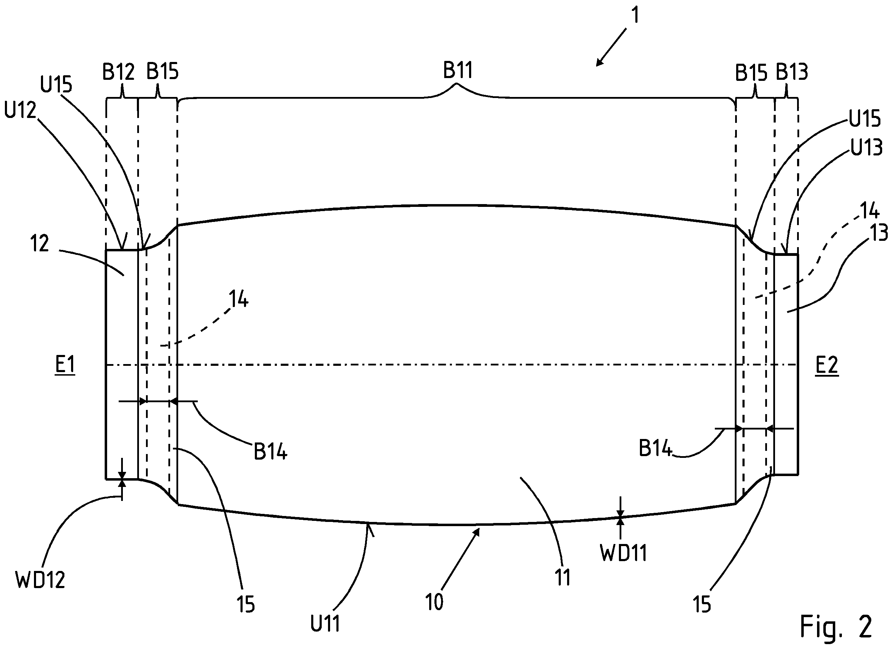

Figur 2 zeigt eine zweite erfindungsgemäße Ausführungsform des Gasdruckbehälters 1, umfassend ein Rohrelement 10 mit einem zweiten Längenabschnitt 12 und einem dritten Längenabschnitt 13 und einen zwischen dem zweiten Längenabschnitt 12 und dem dritten Längenabschnitt 13 angeordneten ersten Längenabschnitt 11. Der zweite und dritte Längenabschnitt 12, 13 weisen einen geringeren Außenumfang $U_{12}$, $U_{13}$ dem Außenumfang $U_{11}$ gegenüber des ersten Längenabschnitts 11 auf, wobei jeweils in einem Übergangsabschnitt 15 der Außenumfang $U_{15}$ kontinuierlich vom ersten Längenabschnitt 11 zu dem zweiten und dritten Längenabschnitt 12, 13 übergeht. Der erste Längenabschnitt 11 weist in Längserstreckung einen leicht radial nach außen gewölbtem Außenumfang $U_{11}$ auf, wobei auch in dieser Ausführungsform der Außenumfang als Außendurchmesser, mithin kreisrund dargestellt ist. Der zweite und dritte Längenabschnitt 12, 13 weisen eine Übergangstemperatur $Tu_{,12}$, $Tu_{,13}$ von kleiner als -50°C auf, welche auch kleiner als die Übergangstemperatur $Tu_{,11}$ des ersten Längenabschnitts 11 ist. Der erste Längenabschnitt 11 weist eine Zugfestigkeit von mindestens 800 MPa und ein metallurgisches Gefüge mit einem Flächenanteil von mindestens 70 % angelassenem Martensit auf. Im Übergangsbereich 14 (gestrichelt dargestellt) zwischen erstem Längenabschnitt 11 und zweitem Längenabschnitt 12 beziehungsweise erstem Längenabschnitt 11 und drittem Längenabschnitt 13 liegt ein eher undefiniertes Mischgefüge und/oder undefinierte mechanische Kennwerte vor, weshalb die Breite $B_{14}$ des Übergangsbereichs 14 geringer ist als die Breite $B_{12}$ des zweiten und $B_{13}$ des dritten Längenabschnitts 12, 13. Bevorzugt ist die Breite $B_{14}$ auch kleiner als die Breite $B_{15}$ des Übergangsabschnitts 15. Der Übergangsbereich 14 liegt somit in dem Übergangsabschnitt 15.

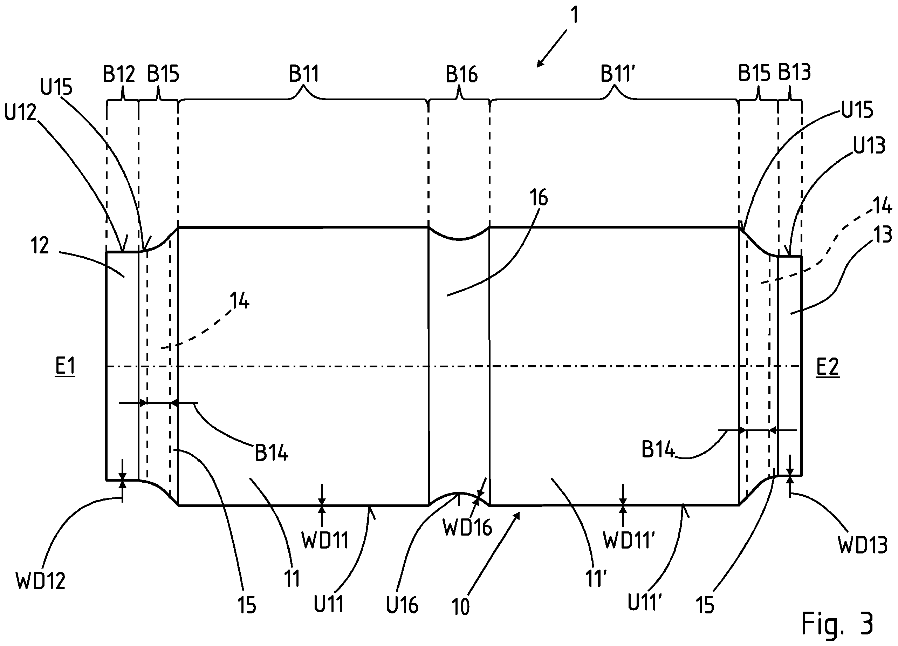

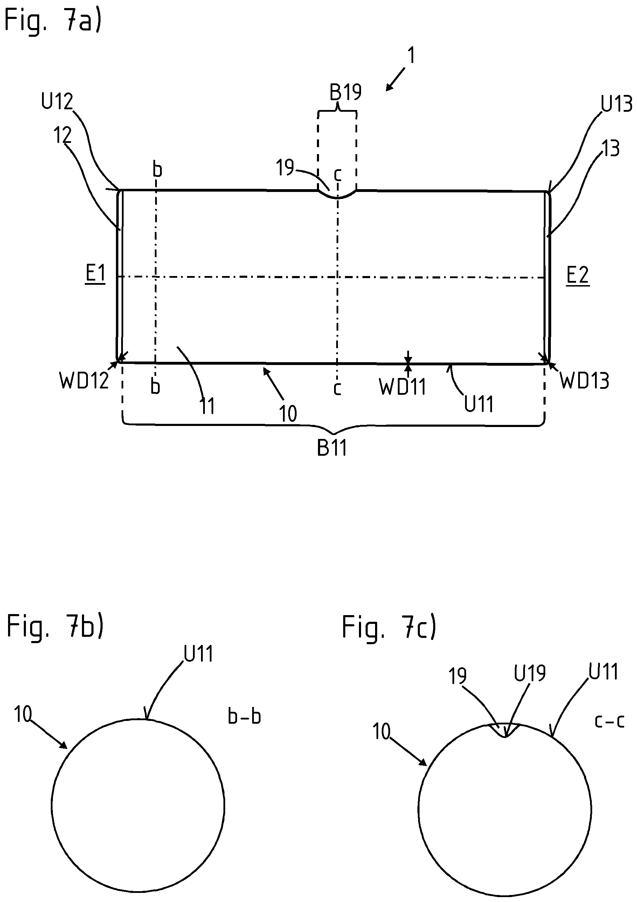

Figur 3 zeigt eine dritte erfindungsgemäße Ausführungsform des Gasdruckbehälters 1, umfassend ein Rohrelement 10 mit einem zweiten Längenabschnitt 12 an einem ersten Ende $E_1$ des Rohrelements 10 und einem dritten Längenabschnitt 13 am zweiten Ende $E_2$ des Rohrelements 10 sowie zwei im Bereich zwischen den Enden $E_1$, $E_2$ angeordnete erste Längenabschnitte 11, 11'. Der zweite und dritte Längenabschnitt 12, 13 weisen einen geringeren Außenumfang $U_{12}$, $U_{13}$ gegenüber dem ersten Längenabschnitt 11, 11' auf, wobei jeweils in einem Übergangsabschnitt 15 der Außenumfang $U_{15}$ kontinuierlich vom ersten Längenabschnitt 11, 11' zu dem zweiten beziehungsweise dritten Längenabschnitt 12, 13 übergeht. Zudem schließen die zwei ersten Längenabschnitte 11, 11' einen weiteren Längenabschnitt 16 ein, der im Außenumfang $U_{16}$ gegenüber den ersten Längenabschnitten 11, 11' reduziert ausgebildet ist. Die Außenumfänge $U_{16}$, $U_{12}$ und $U_{13}$ können voneinander verschieden sein, wobei die Abmessung des weiteren Längenabschnitts 16 insbesondere an daran zu fügende oder sich daran innerhalb des Rohrelements abstützende Einbauteile wie eine Berstscheibe (nicht dargestellt) anpassbar ist. Demgegenüber ist die Abmessung der zweiten und dritten Längenabschnitte 12, 13 so bemessen, dass Verschlussplatten, wie in Figur 7 dargestellt, oder ähnliches anfügbar, insbesondere mit den Enden $E_1$, $E_2$ des Rohrelements 10 verschweißbar sind. Der zweite und dritte Längenabschnitt 12, 13 weisen eine Übergangstemperatur $Tu_{,12}$, $Tu_{,13}$ von kleiner als -50°C auf, welche auch kleiner als die Übergangstemperatur $Tu_{,11}$, $Tu_{,11'}$ der ersten Längenabschnitte 11, 11' ist. Die ersten Längenabschnitte 11, 11' weisen eine Zugfestigkeit von mindestens 800 MPa und ein metallurgisches Gefüge mit einem Flächenanteil von mindestens 70 % angelassenem Martensit auf. In den Übergangsbereichen 14 zwischen erstem Längenabschnitt 11 und zweitem Längenabschnitt 12 beziehungsweise erstem Längenabschnitt 11, 11' und drittem Längenabschnitt 13 sowie erstem Längenabschnitt 11, 11' und weiterem Längenabschnitt 16 liegt ein eher undefiniertes Mischgefüge und/oder undefinierte mechanische Kennwerte vor, weshalb die Breite $B_{14}$ der Übergangsbereiche 14 (gestrichelt dargestellt) geringer ist als die Breite $B_{12}$ des zweiten und $B_{13}$ des dritten Längenabschnitts 12, 13. Bevorzugt ist die Breite $B_{14}$ auch kleiner als die Breite $B_{15}$ der Übergangsabschnitte 15. Ferner liegt eine Wanddicke $WD_{16}$ im weiteren Längenabschnitt 16 vor. Die Wanddicke $WD_{16}$ kann größer oder kleiner der Wanddicke $WD_{11}$, $WD_{11'}$ sein.

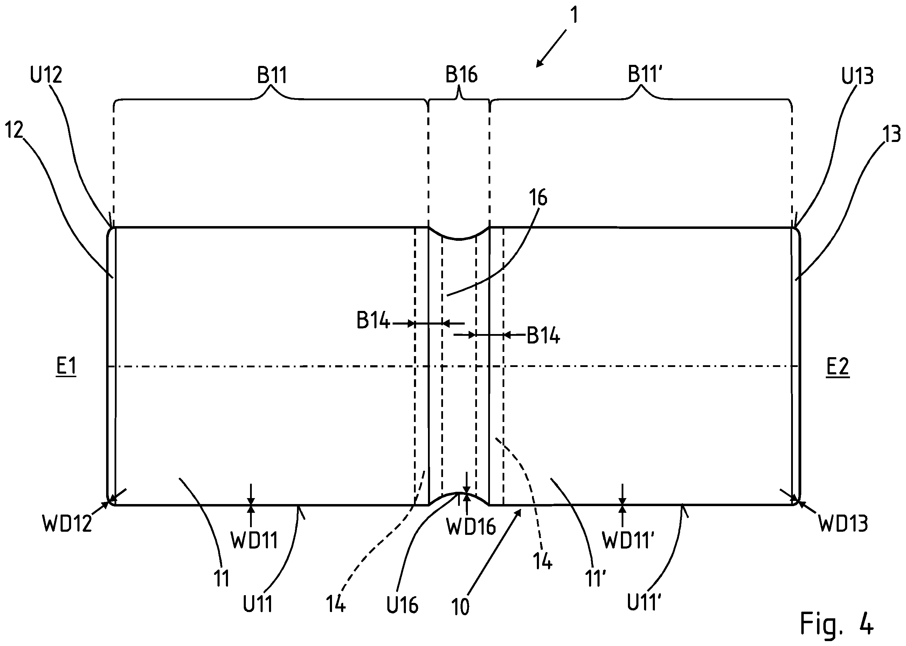

Figur 4 zeigt eine vierte erfindungsgemäße Ausführungsform des Gasdruckbehälters 1, umfassend ein Rohrelement 10 mit einem weiteren Längenabschnitt 16 mit einem geringeren Außenumfang $U_{16}$ gegenüber den zwei sich zu den Enden E1, E2 des Rohrelements 10 davon axial erstreckenden ersten Längenabschnitten 11, 11' mit Außenumfang $U_{11}$, $U_{11'}$.

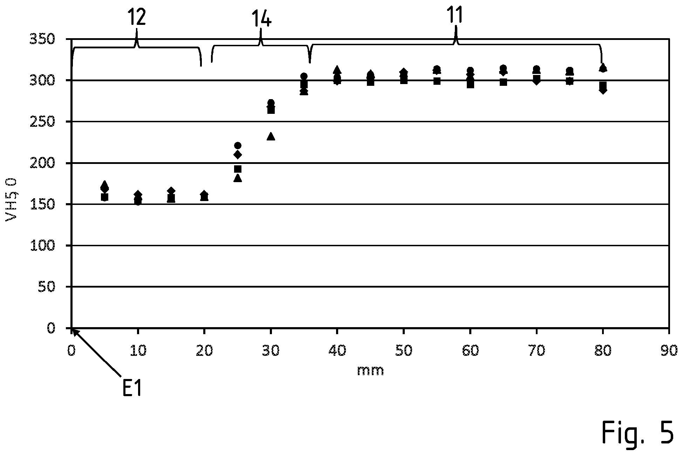

Der Außenumfang $U_{16}$ ist insbesondere an daran innerhalb des Rohrelements zu fügende oder sich daran abstützende Einbauteile wie eine Berstscheibe angepasst. An den Enden $E_1$ und $E_2$ des Rohrelements 10 sind ein zweiter und ein dritter auf die Längsrichtung bezogen sehr kurzer Längenabschnitt 12, 13 ausgebildet, mit den Außenumfängen $U_{12}$, $U_{13}$, welche kleiner als der nicht verringerte Außenumfang der ersten Längenabschnitte $U_{11}$, $U_{11'}$, aber größer als der verringerte Außenumfang $U_{16}$ des weiteren Längenabschnitts 16 in einem mittleren Längenabschnitt sind. Der zweite und dritte Längenabschnitt 12, 13 weisen eine Übergangstemperatur $Tu_{,12}$, $Tu_{,13}$ von kleiner als -50°C auf, welche auch kleiner als die Übergangstemperatur $Tu_{,11}$ des ersten Längenabschnitts 11, 11' ist. Der erste Längenabschnitt 11, 11' weist eine Zugfestigkeit von mindestens 800 MPa und ein metallurgisches Gefüge mit einem Flächenanteil von mindestens 70 % angelassenem Martensit auf. Im Übergangsbereich 14 zwischen erstem und weiterem Längenabschnitt 11, 11', 16 liegt ein eher undefiniertes Mischgefüge und/oder undefinierte mechanische Kennwerte vor. Figur 5 zeigt an einem erfindungsgemäßen Rohrelement 10 den Härteverlauf vor der Reduktion des Außenumfangs ausgehend vom ersten Ende E1 in axialer Richtung über einen zweiten Längenabschnitt 12 zum ersten Längenabschnitt 11. Zu erkennen ist die niedrigere Härte und damit Zugfestigkeit in zweiten Längenabschnitt und ein Übergangsbereich 14 mit steigenden Härtewerten bis zu einem Maximum, welches im ersten Längenabschnitt 11 dann konstant bleiben.

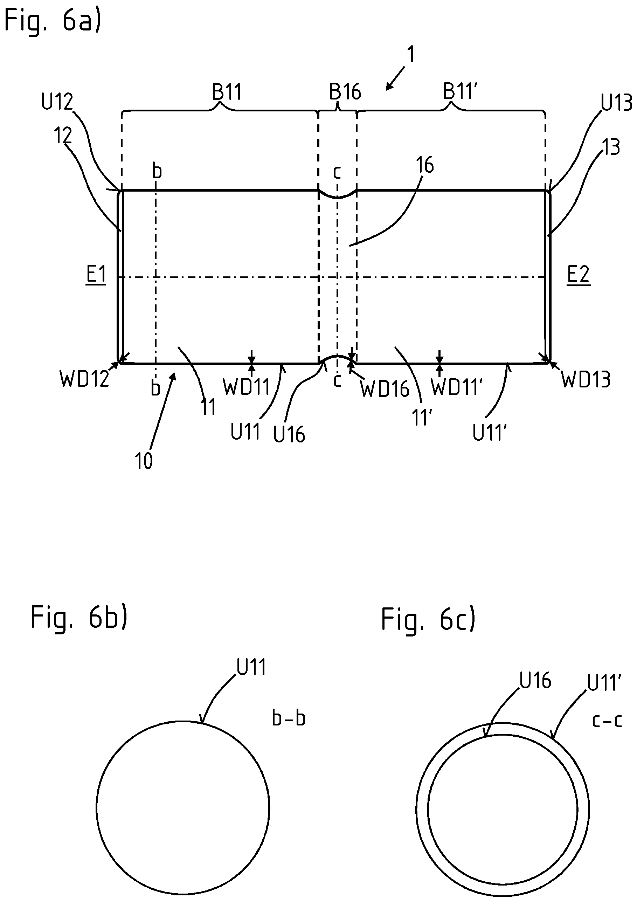

Figur 6a bis c zeigen nochmals eine Ausgestaltungsvariante gemäß Figur 4. In Figur 6b ist eine Schnittlinie b-b aus Figur 6a dargestellt. Zu erkennen ist der konstante kreisrunde Außenumfang $U_{11}$ des ersten Längenabschnittes 11. Figur 6c zeigt eine Schnittlinie c-c aus Figur 6a durch den weiteren Längenabschnitt 16. Zu erkennen ist, dass dieser ebenfalls einen kreisrunden Außenumfang $U_{16}$ aufweist, der jedoch geringer ist als der Außenumfang $U_{11'}$ des in Blickrichtung gemäß Figur 6c dahinter liegenden ersten Längenabschnitts 11'.

Figur 7a bis c zeigen eine dazu alternative Ausgestaltungsvariante. Gemäß Figur 7b, welche eine Schnittdarstellung b-b aus Figur 7a darstellt, ist wiederum ein konstanter Außenumfang $U_{11}$ des ersten Längenabschnitts 11 dargestellt. Dieser weist in einem auf die Längsrichtung bezogen mittleren Bereich eine Kerbe 19 bzw. Einmuldung auf. Der sich durch die Kerbe 19 ergebende Außenumfang $U_{19}$ ist gegenüber dem in Blickrichtung gemäß Figur 7c dahinter liegenden Außenumfang $U_{11}$ vergrößert. Die Kerbe 19 kann in jeder beliebigen geometrischen Form in die Mantelfläche des Rohrelementes 10 eingebracht sein. Insbesondere kann der weitere sich ergebende Längenabschnitt mit der Kerbe 19 für jedes beliebige Ausführungsbeispiel in dieser Druckschrift angewandt werden.

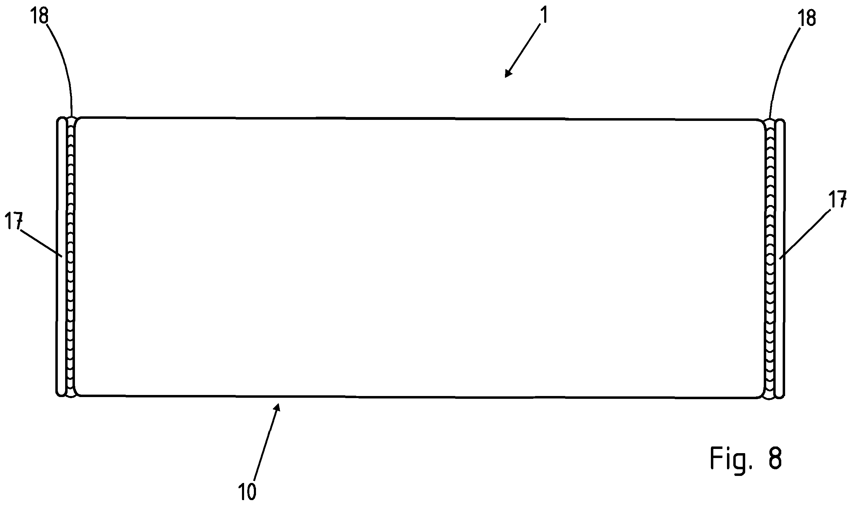

Figur 8 zeigt eine schematische Ansicht des Rohrelementes 10 mit Verschlussplatten 17. Die Verschlussplatten 17 sind mit einer umlaufenden Schweißnaht 18 mit dem Rohrelement dichtgeschweißt. Die Verschlussplatten können auf alle zuvor beschriebenen Ausführungsbeispiele an den Enden E1 und E2 angeschweißt sein.

**Bezugszeichenliste**

| 1 | Gasdruckbehälter |
| 10 | Rohrelement |
| 11 | Erster Längenabschnitt |
| 11' | Erster Längenabschnitt |
| 12 | Zweiter Längenabschnitt |
| 13 | Dritter Längenabschnitt |
| 14 | Übergangsbereich |
| 15 | Übergangsabschnitt |
| 16 | Weiterer Längenabschnitt |
| 17 | Verschlussplatte |
| 18 | Schweißnaht |
| 19 | Kerbe |
| $B_{11}$ | Breite zu 11 |
| $B_{12}$ | Breite zu 12 |

$B_{13}$ — Breite zu 13
$B_{14}$ — Breite zu 14
$B_{15}$ — Breite zu 15
$B_{16}$ — Breite zu 16
$E_1$ — erstes Ende zu 10
$E_2$ — zweites Ende zu 10
M — Mitte zu 1
S — Sollbruchstelle
$Tu_{,10}$ — Übergangstemperatur zu 10
$Tu_{,11}$ — Übergangstemperatur zu 11
$Tu_{,11'}$ — Übergangstemperatur zu 11'
$Tu_{,12}$ — Übergangstemperatur zu 12
$Tu_{,13}$ — Übergangstemperatur zu 13
$Tu_{,15}$ — Übergangstemperatur zu 15
$Tu_{,16}$ — Übergangstemperatur zu 16
U — Außenumfang zu 10
$U_{11}$ — Außenumfang zu 11
$U_{12}$ — Außenumfang zu 12
$U_{13}$ — Außenumfang zu 13
$U_{15}$ — Außenumfang zu 15
$U_{16}$ — Außenumfang zu 16
$U_{19}$ — Außenumfang zu 19
E1 — Ende zu 1
E2 — Ende zu 2
$WD_{11}$ — Wanddicke zu 11
$WD_{11'}$ — Wanddicke zu 11'
$WD_{12}$ — Wanddicke zu 12
$WD_{13}$ — Wanddicke zu 13
$WD_{16}$ — Wanddicke zu 16
$Rm_{,11}$ — Zugfestigkeit zu 11
$Rm_{,12}$ — Zugfestigkeit zu 12
$Rm_{,13}$ — Zugfestigkeit zu 13
$Rm_{,14}$ — Zugfestigkeit zu 14
$Rm_{,15}$ — Zugfestigkeit zu 15
$Rm_{,16}$ — Zugfestigkeit zu 16

**Patentansprüche**

1. Gasdruckbehälter (1), insbesondere für ein Airbagsystem eines Kraftfahrzeugs, umfassend ein Rohrelement (10) mit hoher Berstfestigkeit bei Innendruckbeaufschlagung, wobei das Rohrelement (10) aus einer Stahllegierung besteht und in einem ersten Längenabschnitt (11) eine Zugfestigkeit ($Rm_{,11}$) größer (>) 800MPa, eine Übergangstemperatur ($Tu_{,11}$) kleiner -40°C und einen Außenumfang ($U_1$) aufweist, wobei das Rohrelement (10) einen zweiten Längenabschnitt (12) umfasst, der sich axial vom ersten Längenabschnitt (11) erstreckt, wobei der zweite Längenabschnitt (12) sowie der erste Längenabschnitt (11) einstückig und stoffeinheitlich aus einem nahtlosen oder geschweißten Rohr ausgebildet sind, wobei der zweite Längenabschnitt (12) einen Außenumfang ($U_{12}$) aufweist, der gegenüber dem Außenumfang ($U_{11}$) des ersten Längenabschnitts (11) verringert ist, **dadurch gekennzeichnet, dass** das Rohrelement (10) im zweiten Längenabschnitt (12) eine Übergangstemperatur ($T_{u,12}$) kleiner als (<) -50°C sowie kleiner (<) als die Übergangstemperatur ($T_{u,11}$) des ersten Längenabschnitts (11) aufweist.

2. Gasdruckbehälter nach Anspruch 1, **gekennzeichnet dadurch, dass** das Rohrelement (10) mindestens einen weiteren Längenabschnitt (13, 16) umfasst, der sich axial von dem ersten Längenabschnitt (11) erstreckt, wobei der weitere Längenabschnitt (13, 16) und der erste Längenabschnitt (11) einstückig und stoffeinheitlich aus einem nahtlosen oder geschweißten Rohr ausgebildet sind, wobei der weitere Längenabschnitt (13, 16) einen Außenumfang ($U_{13}$, $U_{16}$) aufweist, der gegenüber dem Außenumfang ($U_{11}$) des ersten Längenabschnittes (11) verringert ist und eine Übergangstemperatur ($Tu_{,13}$, $Tu_{,16}$) des weiteren Längenabschnitts (13, 16) kleiner als (<) -50°C sowie kleiner (<) als die Übergangstemperatur ($Tu_{,11}$) des ersten Längenabschnitts (11) ist.

3. Gasdruckbehälter nach Anspruch 1 oder 2, **gekennzeichnet dadurch, dass** für die Außenumfänge ($U_{11}$, $U_{12}$, $U_{13}$, $U_{16}$) folgender Zusammenhang gilt:

$$U_{12} = (0,6 - 0,9) \times U_{11}, \quad \text{insbesondere } U_{12} = (0,7 - 0,8) \times U_{11},$$

und/oder

$$U_{13} = (0,6 - 0,9) \times U_{11}, \quad \text{insbesondere } U_{13} = (0,7 - 0,8) \times U_{11},$$

und/oder

$$U_{16} = (0,65 - 0,95) \times U_{11}, \text{ insbesondere } U_{16} = (0,75 - 0,85) \times U_{11}.$$

4. Gasdruckbehälter nach einem der vorherigen Ansprüche, **gekennzeichnet dadurch, dass** die Wanddicke ($WD_2$) des zweiten Längenabschnitts (12) und/oder weiteren Längenabschnittes (13, 16) größer als die Wanddicke ($WD_1$) im ersten Längenabschnitt (11) ist, wobei die Wanddicke ($WD_2$) des zweiten Längenabschnitts (12) und/oder weiteren Längenabschnittes (13, 16) mindestens 5% größer als die Wanddicke ($WD_1$) im ersten Längenabschnitt (11) ist.

5. Gasdruckbehälter nach einem der Anspruch 1 bis 3, **gekennzeichnet dadurch, dass** die Wanddicke ($WD_2$) des zweiten Längenabschnitts (12) und/oder weiteren Längenabschnittes (13, 16) kleiner oder gleich der Wanddicke ($WD_1$) des ersten Längenabschnitts (11) ist und/oder dass der zweite Längenabschnitt (12) an einem Ende (E1) des Rohrelements (10) ausgebildet ist.

6. Gasdruckbehälter nach einem der vorherigen Ansprüche, **gekennzeichnet dadurch, dass** der zweite Längenabschnitt (12) und/oder ein weiterer Längenabschnitt (13, 16) mit reduziertem Außenumfang ($U_{12}$, $U_{13}$, $U_{16}$) sich zwischen zwei ersten Längenabschnitten (11,11') mit größerem Außenumfang ($U_{11}$, $U_{11'}$) des Rohrelements (10) erstreckt.

7. Gasdruckbehälter (1) nach einem der vorherigen Ansprüche, **gekennzeichnet dadurch, dass** der erste Längenabschnitt (11) und/oder der zweite Längenabschnitt (12) ein metallisches Gefüge mit einem Flächenanteil von mindestens 70 Prozent angelassenem Martensit aufweist/aufweisen oder dass der zweite Längenabschnitt (12) des Rohrelementes (10) ein Ferrit-Perlit-Mischgefüge mit einem Flächenanteil von mindestens 70 Prozent aufweist.

8. Gasdruckbehälter nach einem der vorherigen Ansprüche, **gekennzeichnet dadurch, dass** der zweite Längenabschnitt (12) gegenüber der Zugfestigkeit ($Rm_{,11}$) des ersten Längenabschnitts (11) eine reduzierte Zugfestigkeit ($Rm_{,12}$) aufweist, wobei gilt:

$$Rm_{,12} < 0,9 \times Rm_{,11}.$$

9. Gasdruckbehälter nach einem der vorherigen Ansprüche, **gekennzeichnet dadurch, dass** zwischen dem zweiten Längenabschnitt (12) und dem ersten Längenabschnitt (11) ein Übergangsbereich (14) angeordnet ist, in welchem die Zugfestigkeit ($Rm_{,14}$) kontinuierlich zunimmt, wobei der Übergangsbereich (14) eine Breite ($B_{14}$) aufweist, die zwischen 10 und 100 mm, bevorzugt zwischen 15 und 40 mm beträgt, wobei zwischen dem zweiten Längenabschnitt (12) und dem ersten Längenabschnitt (11) und/oder zwischen dem dritten Längenabschnitt (13) und dem ersten Längenabschnitt (11) ein Übergangsabschnitt (15) angeordnet ist, in welchem der Außenumfang ($U_{15}$) kontinuierlich in Richtung erstem Längenabschnitt (11) zunimmt und wobei der Übergangsbereich (14) in dem Übergangsabschnitt (15) liegt, wobei der Übergangsabschnitt (15) eine Breite ($B_{15}$) aufweist, die größer ist als die Breite ($B_{14}$) des Übergangsbereichs (14).

10. Gasdruckbehälter nach einem der vorherigen Ansprüche, **gekennzeichnet dadurch, dass** der zweite Längenabschnitt (12) oder der weitere Längenabschnitt (13, 16) als lokale Sollbruchstelle (S) bei Innendruckbeaufschlagung des Gasdruckbehälters (1) ausgebildet ist, bevorzugt ist die Sollbruchstelle (S) in der Mitte (M) des Gasdruckbehälters (1) angeordnet.

**11.** Gasdruckbehälter nach einem der vorhergehenden Ansprüche, **dadurch gekennzeichnet, dass** ein Längenabschnitt in der Mantelfläche des Rohrelements (10) eine Kerbe (19) aufweist und der Außenumfang ($U_{19}$) mit Kerbe (19) gegenüber dem Außenumfang ($U_{11}$) des ersten Längenabschnitts (11) vergrößert ist.

**12.** Gasdruckbehälter nach einem der vorhergehenden Ansprüche, **dadurch gekennzeichnet, dass** ein Rohrelement (10) mit hoher Berstfestigkeit bei Innendruckbeaufschlagungverwendet wird, wobei das Rohrelement (10) ein nahtloses oder geschweißtes, insbesondere kaltgezogenes Stahlrohr mit konstantem Außenumfang (U) ist, wobei das Rohrelement (10) einen ersten Längenabschnitt (11) mit einer Zugfestigkeit ($Rm_{11}$) größer (>) 800MPa und wenigstens einen zweiten Längenabschnitt (12) und optional weitere Längenabschnitte (13, 16) aufweist, und die Längenabschnitte (11, 12, 13, 16) einstückig und stoffeinheitlich ausgebildet sind, und der zweite Längenabschnitt (12) und optional weitere Längenabschnitte (13, 16) des Rohrelementes (10) gegenüber dem ersten Längenabschnitt (11) ein erhöhtes Rohraufweitvermögen nach DIN ISO 8495-2004 aufweist/aufweisen, wobei gilt:

- Rohraufweitvermögen$_{,12}$ > 1,1* Rohraufweitvermögen$_{,11}$ und/oder
- Rohraufweitvermögen$_{,13}$ > 1,1* Rohraufweitvermögen$_{,11}$ und/oder
- Rohraufweitvermögen$_{,16}$ > 1,1* Rohraufweitvermögen$_{,11}$.

**13.** Gasdruckbehälter nach Anspruch 12, **dadurch gekennzeichnet, dass** das Rohrelement (10) aus einer Zusammensetzung folgender Legierungselemente in Masseprozent neben Eisen und erschmelzungsbedingten Verunreinigungen besteht:

| | |
|---|---|
| C | zwischen 0,07 und 0,29; |
| Si | 0,1 bis 0,55; |
| Mn | 0,2 bis 1,6; |
| P | < 0,025; |
| S | < 0,02; |
| Cr | < 2; |
| Ti | < 0,03; |
| Mo | < 0,6; |
| Ni | < 0,6; |
| Al | 0,001 bis 0,05; |
| V | < 0,2; |
| Nb | < 0,05. |

**14.** Verfahren zur Herstellung eines Gasdruckbehälters gemäß den Merkmalen von Patentanspruch 1 umfassend ein Rohrelement (10) mit hoher Berstfestigkeit bei Innendruckbeaufschlagung, welches ausgehend von einem nahtlosen oder geschweißtem Stahlrohr durch folgende Schritte gekennzeichnet ist:

a) Härten gefolgt von einem Anlassen des Rohrs, bevorzugt vor einem Kaltziehen,
b) Optional Kaltziehen des Rohrs,
c) Ablängen zum Rohrelement (10),
d) Partielles Erwärmen des Rohrelements (10) in einem zweiten Längenabschnitt (12) und/oder einem weiteren Längenabschnitt (13), (16) auf Erwärmungstemperatur (Tw), für maximal 120s, bevorzugt maximal 30s, wobei ein erster Längenabschnitt (11) dabei nicht erwärmt wird,
e) Optionales Halten auf der Temperatur (Tw) für maximal 120s, bevorzugt für maximal 30s,
f) Umformen des zweiten Längenabschnitts (12) und/oder des weiteren Längenabschnitts (13, 16) unter Verringerung seines Außenumfangs ($U_{12}$, $U_{13}$, $U_{16}$), bevorzugt sofort nach dem partiellen Erwärmen oder Halten, wobei das Rohrelement (10) einen ersten Längenabschnitt (11) mit einer Übergangstemperatur ($Tu_{,11}$) und einen zweiten Längenabschnitt (12) mit einer Übergangstemperatur ($Tu_{,12}$) und/oder einen weiteren Längenabschnitt (13,16) mit einer Übergangstemperatur ($Tu_{,13}$, $Tu_{,16}$) aufweist, wobei gilt:

$$Tu_{,12} < Tu_{,11} \text{ und } Tu_{,12} < -50°C$$

und/oder

$$Tu,13 < Tu,11 \text{ und } Tu,13 < -50°C$$

und/oder

$$Tu,16 < Tu,11 \text{ und } Tu,16 < -50°C,$$

g) Abkühlen des zweiten Längenabschnitts (12) und/oder des weiteren Längenabschnitts (13, 16) vor oder nach dem Umformen.

**15.** Verfahren nach Anspruch 14, **dadurch gekennzeichnet, dass** der zweite Längenabschnitt (12) und/oder der weitere Längenabschnitt (13, 16) in einer einzigen Fertigungsstufe erwärmt und halbwarm umgeformt wird.

## Claims

**1.** Gas pressure container (1), in particular for an airbag system of a motor vehicle, comprising a tube element (10) with high bursting resistance when internal pressure is applied, wherein the tube element (10) consists of a steel alloy and in a first longitudinal portion (11) has a tensile strength ($R_{m,11}$) which is greater than (>) 800 MPa, a transition temperature ($T_{u,11}$) lower than -40° C and an outer circumference ($U_1$), wherein the tube element (10) comprises a second longitudinal portion (12) which extends axially from the first longitudinal portion (11), wherein the second longitudinal portion (12) and the first longitudinal portion (11) are made in one piece and from the same material as a seamless or welded tube, wherein the second longitudinal portion (12) has an outer circumference ($U_{12}$) which is reduced compared to the outer circumference ($U_{11}$) of the first longitudinal portion (11), **characterised in that** in the second longitudinal portion (12) the tube element (10) has a transition temperature ($T_{u,12}$) lower than (<) -50° C and lower than (<) the transition temperature ($T_{u,11}$) of the first longitudinal portion (11).

**2.** Gas pressure container according to claim 1, **characterised in that** the tube element (10) comprises at least one further longitudinal portion (13, 16) which extends axially from the first longitudinal portion (11), wherein the further longitudinal portion (13, 16) and the first longitudinal portion (11) are made in one piece and from the same material as a seamless or welded tube, wherein the further longitudinal portion (13, 16) has an outer circumference ($U_{13}$, $U_{16}$) which is reduced compared to the outer circumference ($U_{11}$) of the first longitudinal portion (11) and a transition temperature ($Tu_{,13}$, $Tu_{,16}$) of the further longitudinal portion (13, 16) is lower than (<) -50° C and lower than (<) the transition temperature ($Tu_{,11}$) of the first longitudinal portion (11).

**3.** Gas pressure container according to claim 1 or 2, **characterised in that** the following correlation applies to the outer circumferences ($U_{11}$, $U_{12}$, $U_{13}$, $U_{16}$):

$$U_{12} = (0.6–0.9) \times U_{11}, \text{ in particular } U_{12} = (0.7–0.8) \times U_{11},$$

and/or

$$U_{13} = (0.6–0.9) \times U_{11}, \text{ in particular } U_{13} = (0.7–0.8) \times U_{11},$$

and/or

$$U_{16} = (0.65–0.95) \times U_{11}, \text{ in particular } U_{16} = (0.75–0.85) \times U_{11}.$$

**4.** Gas pressure container according to any of the preceding claims, **characterised in that** the wall thickness ($WD_2$) of the second longitudinal portion (12) and/or of the further longitudinal portion (13, 16) is greater than the wall thickness ($WD_1$) in the first longitudinal portion (11), wherein the wall thickness ($WD_2$) of the second longitudinal portion (12) and/or of the further longitudinal portion (13, 16) is at least 5% greater than the wall thickness ($WD_1$) in the first longitudinal portion (11).

5. Gas pressure container according to any of claims 1 to 3, **characterised in that** the wall thickness ($WD_2$) of the second longitudinal portion (12) and/or of the further longitudinal portion (13, 16) is less than or equal to the wall thickness ($WD_1$) of the first longitudinal portion (11) and/or the second longitudinal portion (12) is formed at one end (E1) of the tube element (10).

6. Gas pressure container according to any of the preceding claims, **characterised in that** the second longitudinal portion (12) and/or a further longitudinal portion (13, 16) with a reduced outer circumference ($U_{12}$, $U_{13}$, $U_{16}$) extends between two first longitudinal portions (11, 11') with a greater outer circumference ($U_{11}$, $U_{11'}$) of the tube element (10).

7. Gas pressure container (1) according to any of the preceding claims, **characterised in that** the first longitudinal portion (11) and/or the second longitudinal portion (12) comprises/comprise a metallic microstructure with a surface portion of at least 70 percent tempered martensite or **in that** the second longitudinal portion (12) of the tube element (10) comprises a ferrite-perlite mixed microstructure with a surface portion of at least 70 percent.

8. Gas pressure container according to any of the preceding claims, **characterised in that** the second longitudinal portion (12) has a reduced tensile strength ($R_{m,12}$) compared to the tensile strength ($R_{m,11}$) of the first longitudinal portion, wherein the following applies:

$$R_{m,12} < 0.9 \times R_{m,11}.$$

9. Gas pressure container according to any of the preceding claims, **characterised in that** a transitional area (14), in which the tensile strength ($R_{m,14}$) continuously increases, is arranged between the second longitudinal portion (12) and the first longitudinal portion (11), wherein the transitional area (14) has a width ($B_{14}$) which is between 10 and 100 mm, preferably between 15 and 40 mm, wherein a transition portion (15), in which the outer circumference ($U_{15}$) increases continuously in the direction of the first longitudinal portion (11), is arranged between the second longitudinal portion (12) and the first longitudinal portion (11) and/or between the third longitudinal portion (13) and the first longitudinal portion (11) and wherein the transitional area (14) is located in the transition portion (15), wherein the transition portion (15) has a width ($B_{15}$) which is greater than the width ($B_{14}$) of the transitional area (14).

10. Gas pressure container according to any of the preceding claims, **characterised in that** the second longitudinal portion (12) or the further longitudinal portion (13, 16) is formed as a local predetermined breaking point (S) when internal pressure is applied in the gas pressure container (1), preferably the predetermined breaking point (S) is arranged in the centre (M) of the gas pressure container (1).

11. Gas pressure container according to any of the preceding claims, **characterised in that** a longitudinal portion comprises a notch (19) in the lateral surface of the tube element (10) and the outer circumference ($U_{19}$) with notch (19) is enlarged compared to the outer circumference ($U_{11}$) of the first longitudinal portion (11).

12. Gas pressure container according to any of the preceding claims, **characterised in that** a tube element (10) is used with high bursting resistance when internal pressure is applied, wherein the tube element (10) is a seamless or welded, in particular cold drawn steel tube with a constant outer circumference (U), wherein the tube element (10) comprises a first longitudinal portion (11) with a tensile strength ($R_{m,11}$) greater than (>) 800 MPa and at least one second longitudinal portion (12) and, as an option, further longitudinal portions (13, 16), and the longitudinal portions (11, 12, 13, 16) are made in one piece and from the same material, and the second longitudinal portion (12) and, as an option, further longitudinal portions (13, 16) of the tube element (10) have an increased tube expanding capacity according to DIN ISO 8495 2004 compared to the first longitudinal portion (11), wherein the following applies:

- tube expanding capacity,$_{12}$ > 1.1* tube expanding capacity,$_{11}$ and/or
- tube expanding capacity,$_{13}$ > 1.1* tube expanding capacity,$_{11}$ and/or
- tube expanding capacity,$_{16}$ > 1.1* tube expanding capacity,$_{11}$.

13. Gas pressure container according to claim 12, **characterised in that** the tube element (10) consists of a composition of the following alloy elements in percent by weight along with iron and contaminants necessary to the smelting process:

| | |
|---|---|
| C | between 0.07 and 0.29; |
| Si | 0.1 to 0.55; |
| Mn | 0.2 to 1.6; |
| P | < 0.025; |
| S | < 0.02; |
| Cr | < 2; |
| Ti | < 0.03; |
| Mo | < 0.6; |
| Ni | < 0.6; |
| Al | 0.001 to 0.05; |
| V | < 0.2; |
| Nb | < 0.05; |

**14.** Method for producing a gas pressure container according to the features of claim 1 comprising a tube element (10) with high bursting resistance when internal pressure is applied, which, proceeding from a seamless or welded steel tube, is **characterised by** the following steps:

a) hardening and then tempering the tube, preferably prior to cold drawing,
b) optionally cold-drawing the tube,
c) cutting the tube element (10) to length,
d) heating the tube element (10) partially in a second longitudinal portion (12) and/or a further longitudinal portion (13), (16) to heating temperature (Tw), for a maximum of 120s, preferably a maximum of 30s, wherein a first longitudinal portion (11) is not heated thereby,
e) optionally maintaining the temperature (Tw) for a maximum of 120s, preferably for a maximum of 30s,
f) forming the second longitudinal portion (12) and/or the further longitudinal portion (13, 16) by reducing its outer circumference ($U_{12}$, $U_{13}$, $U_{16}$), preferably directly after partially heating or holding, wherein the tube element (10) comprises a first longitudinal portion (11) with a transition temperature ($Tu_{11}$) and a second longitudinal portion (12) with a transition temperature ($Tu_{12}$) and/or a further longitudinal portion (13, 16) with a transition temperature ($Tu_{13}$, $Tu_{16}$), wherein the following applies:

$$Tu_{12} < Tu_{11} \text{ and } Tu_{12} < -50°\,C$$

and/or

$$Tu_{13} < Tu_{11} \text{ and } Tu_{13} < -50°\,C$$

and/or

$$Tu_{16} < Tu_{11} \text{ and } Tu_{16} < -50°\,C,$$

g) cooling the second longitudinal portion (12) and/or the further longitudinal portion (13, 16) prior to or after the forming.

**15.** Method according to claim 14, **characterised in that** the second longitudinal portion (12) and/or the further longitudinal portion (13, 16) is/are heated and warm formed in one single production step.

**Revendications**

**1.** Récipient de gaz sous pression (1), en particulier pour un système d'airbag d'un véhicule automobile, comprenant un élément tubulaire (10) ayant une grande résistance à l'éclatement lorsqu'il est soumis à une pression interne, dans lequel l'élément tubulaire (10) est en un alliage d'acier et présente dans une première partie en longueur (11) une résistance à la traction ($R_{m,11}$) supérieure (>) à 800MPa, une température de transition ($T_{u,11}$) inférieure à -40 °C et une circonférence extérieure ($U_1$), dans lequel l'élément tubulaire (10) comprend une deuxième partie en longueur (12) qui s'étend de façon axiale à partir de la première partie en longueur (11), dans lequel la deuxième partie en longueur (12) ainsi que la première partie en longueur (11) sont réalisées d'une seule pièce et dans la même matière à partir d'un tube sans soudure ou soudé, dans lequel la deuxième partie en longueur (12) présente une circonférence extérieure ($U_{12}$) qui est réduite par rapport à la circonférence extérieure ($U_{11}$) de la première partie en longueur (11), **caractérisé en ce que** l'élément tubulaire (10) présente dans la deuxième partie en longueur (12) une température de transition ($T_{u,12}$) inférieure (<) à -50 °C et inférieure (<) à la température de transition ($T_{u,11}$) de la première partie en longueur (11).

2. Récipient de gaz sous pression selon la revendication 1, **caractérisé en ce que** l'élément tubulaire (10) comprend au moins une autre partie en longueur (13, 16) qui s'étend de façon axiale à partir de la première partie en longueur (11), dans lequel l'autre partie en longueur (13, 16) et la première partie en longueur (11) sont réalisées d'une seule pièce et dans la même matière à partir d'un tube sans soudure ou soudé, dans lequel l'autre partie en longueur (13, 16) présente une circonférence extérieure ($U_{13}$, $U_{16}$) qui est réduite par rapport à la circonférence extérieure ($U_{11}$) de la première partie en longueur (11) et une température de transition ($T_{u,13}$, $T_{u,16}$) de l'autre partie en longueur (13, 16) est inférieure (<) à -50 °C et inférieure (<) à la température de transition ($T_{u,11}$) de la première partie en longueur (11).

3. Récipient de gaz sous pression selon la revendication 1 ou 2, **caractérisé en ce que**, pour les circonférences extérieures ($U_{11}$, $U_{12}$, $U_{13}$, $U_{16}$), on a les relations suivantes :

$$U_{12} = (0{,}6\text{-}0{,}9) \times U_{11}, \text{ en particulier } U_{12} = (0{,}7\text{-}0{,}8) \times U_{11},$$

et/ou

$$U_{13} = (0{,}6\text{-}0{,}9) \times U_{11}, \text{ en particulier } U_{13} = (0{,}7\text{-}0{,}8) \times U_{11},$$

et/ou

$$U_{16} = (0{,}65\text{-}0{,}95) \times U_{11}, \text{ en particulier } U_{16} = (0{,}75\text{-}0{,}85) \times U_{11}.$$

4. Récipient de gaz sous pression selon l'une quelconque des revendications précédentes, **caractérisé en ce que** l'épaisseur de paroi ($WD_2$) de la deuxième partie en longueur (12) et/ou de l'autre partie en longueur (13, 16) est supérieure à l'épaisseur de paroi ($WD_1$) dans la première partie en longueur (11), l'épaisseur de paroi ($WD_2$) de la deuxième partie en longueur (12) et/ou de l'autre partie en longueur (13, 16) étant supérieure d'au moins 5 % à l'épaisseur de paroi ($WD_1$) dans la première partie en longueur (11).

5. Récipient de gaz sous pression selon l'une quelconque des revendications 1 à 3, **caractérisé en ce que** l'épaisseur de paroi ($WD_2$) de la deuxième partie en longueur (12) et/ou de l'autre partie en longueur (13, 16) est inférieure ou égale à l'épaisseur de paroi ($WD_1$) de la première partie en longueur (11) et/ou **en ce que** la deuxième partie en longueur (12) est réalisée à une extrémité (E1) de l'élément tubulaire (10).

6. Récipient de gaz sous pression selon l'une quelconque des revendications précédentes, **caractérisé en ce que** la deuxième partie en longueur (12) et/ou une autre partie en longueur (13, 16) avec une circonférence extérieure réduite ($U_{12}$, $U_{13}$, $U_{16}$) s'étend entre deux premières parties en longueur (11, 11') avec une circonférence extérieure supérieure ($U_{11}$, $U_{11'}$) de l'élément tubulaire (10).

7. Récipient de gaz sous pression (1) selon l'une quelconque des revendications précédentes, **caractérisé en ce que** la première partie en longueur (11) et/ou la deuxième partie en longueur (12) présentent une structure métallique avec une proportion surfacique d'au moins 70 pour cent de martensite revenue ou **en ce que** la deuxième partie en longueur (12) de l'élément tubulaire (10) présente une structure mélangée de ferrite et de perlite avec une proportion surfacique d'au moins 70 pour cent.

**8.** Récipient de gaz sous pression selon l'une quelconque des revendications précédentes, **caractérisé en ce que** la deuxième partie en longueur (12) présente, par rapport à la résistance à la traction ($Rm_{,11}$) de la première partie en longueur (11) une résistance à la traction ($Rm_{,12}$) réduite, avec :

$$Rm_{,12} < 0,9xRm_{,11}.$$

**9.** Récipient de gaz sous pression selon l'une quelconque des revendications précédentes, **caractérisé en ce qu'**une zone de transition (14) est agencée entre la deuxième partie en longueur (12) et la première partie en longueur (11), zone de transition dans laquelle la résistance à la traction ($Rm_{,14}$) augmente de manière continue, dans lequel la zone de transition (14) a une largeur ($B_{14}$) qui vaut entre 10 et 100 mm, de préférence entre 15 et 40 mm, dans lequel une partie de transition (15) est agencée entre la deuxième partie en longueur (12) et la première partie en longueur (11) et/ou entre la troisième partie en longueur (13) et la première partie en longueur (11), partie de transition dans laquelle la circonférence extérieure ($U_{15}$) augmente de façon continue en direction de la première partie en longueur (11) et dans lequel la zone de transition (14) se trouve dans la partie de transition (15), la partie de transition (15) ayant une largeur ($B_{15}$) qui est supérieure à la largeur ($B_{14}$) de la zone de transition (14).

**10.** Récipient de gaz sous pression selon l'une quelconque des revendications précédentes, **caractérisé en ce que** la deuxième partie en longueur (12) ou l'autre partie en longueur (13, 16) est réalisée comme un point destiné à la rupture (S) local lorsque le récipient de gaz sous pression (1) est soumis à une pression interne, le point destiné à la rupture (S) est agencé de préférence au milieu (M) du récipient de gaz sous pression (1).

**11.** Récipient de gaz sous pression selon l'une quelconque des revendications précédentes, **caractérisé en ce qu'**une partie en longueur dans la surface enveloppante de l'élément tubulaire (10) présente une entaille (19) et la circonférence extérieure ($U_{19}$) avec entaille (19) est agrandie par rapport à la circonférence extérieure ($U_{11}$) de la première partie en longueur (11).

**12.** Récipient de gaz sous pression selon l'une quelconque des revendications précédentes, **caractérisé en ce qu'**on utilise un élément tubulaire (10) ayant une grande résistance à l'éclatement lorsqu'il est soumis à une pression interne, dans lequel l'élément tubulaire (10) est un tube en acier sans soudure ou soudé, en particulier étiré à froid, avec une circonférence extérieure (U) constante, dans lequel l'élément tubulaire (10) comporte une première partie en longueur (11) avec une résistance à la traction ($R_{m,11}$) supérieure (>) à 800MPa et au moins une deuxième partie en longueur (12) et optionnellement d'autres parties en longueur (13, 16), les parties en longueur (11, 12, 13, 16) sont réalisées d'une seule pièce et dans la même matière et la deuxième partie en longueur (12) et optionnellement d'autres parties en longueur (13, 16) de l'élément tubulaire (10) présentent par rapport à la première partie en longueur (11) une capacité d'élargissement de tube selon DIN ISO 8495-2004 accrue, avec :

- capacité d'élargissement de tube$_{,12}$ > 1,1*capacité d'élargissement de tube$_{,11}$ et/ou
- capacité d'élargissement de tube$_{,13}$ > 1,1*capacité d'élargissement de tube$_{,11}$ et/ou
- capacité d'élargissement de tube$_{,16}$ > 1,1*capacité d'élargissement de tube$_{,11}$.

**13.** Récipient de gaz sous pression selon la revendication 12, **caractérisé en ce que** l'élément tubulaire (10) est constitué d'une composition des éléments d'alliage suivant, exprimés en pourcentage pondéral, en plus du fer et des impuretés dues à la fabrication :

| | |
|---|---|
| C | entre 0,07 et 0,29 ; |
| Si | 0,1 à 0,55 ; |
| Mn | 0,2 à 1,6 ; |
| P | < 0,025 ; |
| S | < 0,02 ; |
| Cr | < 2 ; |
| Ti | < 0,03 ; |
| Mo | < 0,6; |
| Ni | < 0,6; |
| Al | 0,001 à 0,05 ; |

(suite)

| V | < 0,2 ; |
| Nb | < 0,05. |

**14.** Procédé de fabrication d'un récipient de gaz sous pression selon les caractéristiques de la revendication 1, comprenant un élément tubulaire (10) ayant une grande résistance à l'éclatement lorsqu'il est soumis à une pression interne, qui, à partir d'un tube en acier sans soudure ou soudé, est **caractérisé par** les étapes suivantes :

a) durcissage suivi par un revenu du tube, de préférence avant un étirage à froid,

b) en option, étirage à froid du tube,

c) coupe à la longueur pour obtenir l'élément tubulaire (10),

d) réchauffage partiel de l'élément tubulaire (10) dans une deuxième partie en longueur (12) et/ou une autre partie en longueur (13), (16) jusqu'à la température de réchauffage (Tw), pendant 120 s au maximum, de préférence pendant 30 s au maximum, une première partie en longueur (11) n'étant pas réchauffée ce faisant,

e) maintien optionnel à la température (Tw) pendant 120 s au maximum, de préférence pendant 30 s au maximum,

f) déformation de la deuxième partie en longueur (12) et/ou de l'autre partie en longueur (13, 16) avec réduction de sa circonférence extérieure ($U_{12}$, $U_{13}$, $U_{16}$), de préférence immédiatement après le réchauffage partiel ou le maintien à température, l'élément tubulaire (10) comportant une première partie en longueur (11) avec une température de transition ($Tu_{,11}$) et une deuxième partie en longueur (12) avec une température de transition ($Tu_{,12}$) et/ou une autre partie en longueur (13, 16) avec une température de transition ($Tu_{,13}$, $Tu_{,16}$), avec :

$$Tu_{,12} < Tu_{,11} \text{ et } Tu_{,12} < -50 \text{ °C}$$

et/ou

$$Tu_{,13} < Tu_{,11} \text{ et } Tu_{,13} < -50 \text{ °C}$$

et/ou

$$Tu_{,16} < Tu_{,11} \text{ et } Tu_{,16} < -50 \text{ °C,}$$

g) refroidissement de la deuxième partie en longueur (12) et/ou de l'autre partie en longueur (13, 16) avant ou après la déformation.

**15.** Procédé selon la revendication 14, **caractérisé en ce que** la deuxième partie en longueur (12) et/ou l'autre partie en longueur (13, 16) sont réchauffées et déformées à moitié chaudes en une seule étape de fabrication.

Fig. 1a)

Fig. 1b)

Fig. 1c)

Fig. 2

EP 3 233 577 B1

20

Fig. 3

EP 3 233 577 B1

Fig. 4

Fig. 5

Fig. 6a)

B11          B16          B11'

U12

12

b          c          16

E1 ⎯ ⎯ ⎯ ⎯ ⎯ ⎯ ⎯ ⎯ ⎯ ⎯ ⎯ ⎯ ⎯ ⎯ E2

1

U13

13

WD12          b          WD11          c          WD16          WD11'          WD13

11          11'

U11   U16          U11'

10

Fig. 6b)

U11

b-b

Fig. 6c)

U16   U11'

c-c

## Fig. 7a)

## Fig. 7b)

b-b

## Fig. 7c)

c-c

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1983065 A1
- US 2002040907 A1
- US 8196956 B1

**In der Beschreibung aufgeführte Nicht-Patentliteratur**

- Herstellung eigenschaftsoptimierter Bauteile mit der Hochdruck-Blechumformung und Analyse der induzierten Eigenspannungen. **DR. RAINER KRUX.** Dortmunder Umformtechnik. 2004